# FASCICULE DE BREVET EUROPEEN

(11) **EP 0 782 595 B1**
(45) Date de publication et mention de la délivrance du brevet: **13.01.1999**
(21) Numéro de dépôt: 95933364.2
(22) Date de dépôt: 12.09.1995
(51) Int. Cl.: C08J 5/22, B01D 61/44

(54) **PROCEDE DE FABRICATION D'UNE MEMBRANE BIPOLAIRE**
VERFAHREN ZUR HERSTELLUNG EINER BIPOLAREN MEMBRAN
METHOD FOR MAKING A BIPOLAR MEMBRANE

(30) Priorité: 20.09.1994 IT MI941905
(43) Date de publication de la demande: 09.07.1997
(73) Titulaire: SOLVAY (Société Anonyme), B-1050 Bruxelles (BE)
(72) Inventeur: POSAR, Francesco, I-57013 Rosignano-Solvay (IT)
(74) Mandataire: Anthoine, Paul
(86) Numéro de dépôt international: EP9503596
(87) Numéro de publication internationale: WO9609337

(56) Documents cités:
- EP-A- 0 459 820
- WO-A-89/01059
- GB-A- 2 122 543
- US-A- 4 238 305

## Description

La présente invention concerne un procédé pour la fabrication de membranes bipolaires.

Les membranes bipolaires sont des éléments constitutifs des cellules d'électrodialyse. Ces dernières sont bien connues en technique où elles sont notamment utilisées pour la fabrication d'acides et de bases au départ de leurs sels.

Dans des procédés généralement utilisés pour fabriquer des membranes bipolaires on accole une membrane cationique et une membrane anionique, qui ont au préalable subi un prétraitement de conditionnement. A cet effet, dans la demande internationale WO 89/01059 (UNISEARCH LIMITED), on décrit un procédé de fabrication d'une membrane bipolaire, selon lequel une membrane cationique et une membrane anionique sont soumises à un prétraitement de conditionnement identique, qui comprend leur mise en contact avec une solution aqueuse d'un sel d'un métal autre que le sodium ou le potassium et avec une solution alcaline (généralement une solution aqueuse d'hydroxyde de sodium); les membranes recueillies du prétraitement de conditionnement sont ensuite superposées pour constituer la membrane bipolaire.

Les membranes bipolaires obtenues au moyen du procédé connu prédécrit se caractérisent généralement par une bonne cohésion mécanique et une résistance électrique modérée.

Le procédé connu qui vient d'être décrit en référence à la demande internationale WO 89/01059 implique qu'avant d'accoler les deux membranes unipolaires (la membrane anionique et la membrane cationique), celles-ci soient soumises à un prétraitement de conditionnement avec un sel de métal polyvalent, d'une part, et avec une solution aqueuse d'hydroxyde de métal alcalin d'autre part. Ce procédé connu nécessite de la sorte un nombre élevé d'opérations industrielles, ce qui le complique et le rend onéreux.

L'invention a pour objectif de simplifier le procédé connu précité, sans nuire aux performances des membranes bipolaires obtenues.

En conséquence, l'invention concerne un procédé de fabrication d'une membrane bipolaire, selon lequel on accole une membrane anionique à une membrane cationique que l'on a au préalable soumises à un prétraitement de conditionnement avec un milieu aqueux, le prétraitement de conditionnement de la membrane anionique comprenant une mise en contact de celle-ci avec un composé d'un métal polyvalent et avec une solution aqueuse d'hydroxyde de métal alcalin et le prétraitement de conditionnement de la membrane cationique avec le milieu aqueux consistant essentiellement en une mise en contact de ladite membrane cationique avec de l'eau qui est essentiellement exempte de métal polyvalent et de métal alcalin.

On entend désigner par membrane cationique une feuille mince, non poreuse, sélectivement perméable aux cations et imperméable aux anions. Les membranes cationiques utilisables dans le procédé selon l'invention doivent être en une matière inerte vis-à-vis des solutions aqueuses acides ou basiques. Des membranes cationiques utilisables dans le procédé selon l'invention sont par exemple des feuilles en polymère fluoré contenant des groupements fonctionnels dérivés d'acides sulfoniques, d'acides carboxyliques ou d'acides phosphoniques ou des mélanges de tels groupements fonctionnels, ces groupements jouant le rôle de sites cationiques fixes de la membrane. Des exemples de membranes de ce type sont celles connues sous le nom RAIPORE (PALL RAI) et sous la marque MORGANE (SOLVAY), en particulier les membranes RAIPORE R-4010, MORGANE CDS et MORGANE CRA.

Par définition, une membrane anionique est une feuille mince, non poreuse, sélectivement perméable aux anions et imperméable aux cations. Des membranes anioniques utilisables dans le procédé selon l'invention sont des feuilles en un matériau polymérique inerte vis-à-vis des solutions aqueuses acides ou basiques et comprenant des groupements d'ammonium quaternaire jouant le rôle de sites anioniques fixes. Les membranes RAIPORE R-1030, RAIPORE R-4030 et MORGANE ADP constituent des exemples de membranes anioniques utilisables dans le procédé selon l'invention.

Les membranes bipolaires sont des membranes qui présentent, sur une face, les propriétés d'une membrane cationique et, sur l'autre face, les propriétés d'une membrane anionique.

L'épaisseur des membranes anionique et cationique va conditionner les propriétés mécaniques et électrochimiques de la membrane bipolaire obtenue à l'issue du procédé selon l'invention. L'épaisseur optimum des membranes anionique et cationique va résulter d'un compromis entre une résistance mécanique suffisante (propriété favorisée par les grandes épaisseurs) et une faible résistance électrique transversale (propriété favorisée par les faibles épaisseurs). En pratique, l'épaisseur des membranes anionique et cationique est généralement supérieure à 10 µm, de préférence au moins égale à 20 µm. Elle est généralement inférieure à 250 µm et excède rarement 200 µm, les épaisseurs les plus adéquates étant généralement de 30 à 150 µm.

Dans le procédé selon l'invention, le métal polyvalent est avantageusement sélectionné parmi les éléments de transition. Le chrome, le fer, le nickel, le rhodium, le zirconium et le ruthénium sont préférés. Le chrome convient particulièrement bien.

Le composé de métal polyvalent est de préférence un sel inorganique. Celui-ci peut avantageusement être sélectionné parmi les chlorures, les nitrates, les phosphates et les sulfates. Les chlorures sont préférés et, parmi ceux-ci, le chlorure chromique est spécialement recommandé. On utilise avantageusement du chlorure chromique hydraté, le chlorure chromique hexahydraté étant préféré.

Dans le prétraitement de conditionnement de la membrane anionique, la mise en contact de ladite membrane anionique avec le composé de métal polyvalent a pour fonction de substituer une partie au moins des co-ions de la membrane anionique par des ions du métal polyvalent. Les ions du métal polyvalent sont généralement des anions complexes. On cherche généralement à incorporer dans la membrane anionique une quantité de cations du métal polyvalent supérieure à 10 (de préférence au moins égale à 20) et inférieure à 100 (de préférence n'excédant pas 50) mg par m² de la face de la membrane anionique destinée à venir en contact avec la membrane cationique, les valeurs de 25 à 40 mg/m² convenant généralement bien.

La mise en contact de la membrane anionique avec le composé de métal polyvalent peut avantageusement être effectuée en mettant en oeuvre une solution aqueuse du composé de métal polyvalent, dont on imprègne ensuite la face de la membrane anionique, qui est destinée à toucher la membrane cationique dans la membrane bipolaire. Pour imprégner ladite face de la membrane anionique avec ladite solution aqueuse, on peut par exemple opérer par badigeonnage de la membrane au moyen d'une brosse, par pulvérisation de la solution sur la membrane ou par immersion de celle-ci dans un bain de la solution. Dans cette forme de réalisation de l'invention, la solution aqueuse du composé de métal polyvalent peut être indifféremment une solution acide, une solution basique ou une solution de pH neutre. Les solutions basiques sont préférées, en particulier celles dont le pH est au moins égal à 10, de préférence à 12. La concentration de la solution aqueuse n'est pas critique, les solutions concentrées étant toutefois préférées. En pratique, on recommande d'utiliser des solutions aqueuses dont la concentration en composé de métal polyvalent est au moins égale à 0,1 (de préférence à 0,5) mole/l. La concentration maximum admissible de la solution aqueuse du composé de métal polyvalent est celle qui correspond à la saturation et elle dépend dès lors de divers paramètres tels que la nature du composé de métal polyvalent, la température de la solution et la valeur du pH de celle-ci. On préfère mettre en oeuvre des solutions à une température voisine de la température ambiante, par exemple de 15 à 35 °C.

La mise en contact de la membrane anionique avec le composé de métal polyvalent peut être exécutée indifféremment à la température ambiante ou à haute température, celle-ci devant toutefois rester inférieure à la température de dégradation thermique de la membrane anionique. La durée du traitement doit être suffisante pour incorporer le nombre souhaité d'ions de métal polyvalent dans la membrane anionique. Elle va dès lors dépendre de nombreux paramètres tels que le composé de métal polyvalent sélectionné, la température et, lorsque le composé de métal polyvalent est mis en oeuvre à l'état d'une solution aqueuse, la concentration de celle-ci.

Selon l'invention, le prétraitement de conditionnement de la membrane anionique comprend également sa mise en contact avec une solution aqueuse d'hydroxyde de métal alcalin. Le métal alcalin n'est pas critique. Le sodium et le lithium sont cependant préférés, le lithium s'étant révélé spécialement avantageux.

La mise en contact de la membrane anionique avec la solution aqueuse d'hydroxyde de métal alcalin peut par exemple être réalisée par pulvérisation de la solution sur la face de la membrane anionique, qui est destinée à toucher la membrane cationique dans la membrane bipolaire, ou par badigeonnage de ladite face avec la solution. Un moyen préféré consiste à immerger la membrane dans un bain de la solution.

Bien que ne souhaitant pas être liés par une explication théorique, les inventeurs pensent que la mise en contact de la membrane anionique avec la solution aqueuse d'hydroxyde de métal alcalin a pour fonction de former des hydroxydes métalliques avec les ions de métal polyvalent qui sont présents dans la membrane anionique. Il s'impose dès lors, conformément à l'invention, de mettre en oeuvre une quantité théorique au moins suffisante de la solution d'hydroxyde de métal alcalin pour former des hydroxydes métalliques avec une fraction substantielle des ions de métal polyvalent de la membrane anionique, ladite fraction étant généralement au moins égale à 50, de préférence à 90 % des ions de métal polyvalent, présents dans la membrane anionique.

La quantité optimum à mettre en oeuvre pour ce qui concerne la solution aqueuse d'hydroxyde de métal alcalin va dès lors dépendre de divers paramètres tels que la quantité d'ions de métal polyvalent dans la membrane anionique, la nature du métal polyvalent, notamment sa valence, la concentration de la solution et sa température et elle peut être déterminée dans chaque cas particulier par un travail de routine au laboratoire. En pratique, on obtient généralement de bons résultats avec des solutions d'hydroxyde de métal alcalin contenant au moins 0,5 (de préférence 0,8) mole d'hydroxyde de métal alcalin par litre, la teneur maximum admissible correspondant à la saturation. Des teneurs de 0,8 à 1,2 mole d'hydroxyde de métal alcalin par litre conviennent généralement bien. Bien que des solutions à la température ambiante puissent convenir, on préfère mettre en oeuvre des solutions chaudes, par exemple à une température de 50 à 90 °C.

Dans le prétraitement de conditionnement de la membrane anionique, la mise en contact de celle-ci avec la solution aqueuse d'hydroxyde de métal alcalin peut être exécutée en même temps que sa mise en contact avec le composé de métal polyvalent, en utilisant à cet effet, une solution aqueuse du composé de métal polyvalent et d'hydroxyde de métal alcalin. On préfère toutefois, selon l'invention, que la mise en contact de la membrane avec la solution aqueuse d'hydroxyde de métal alcalin suive sa mise en contact avec le composé de métal polyvalent, la solution aqueuse d'hydroxyde de métal alcalin étant alors exempte de composé de métal polyvalent. Ce mode d'exécution préféré du prétraitement de la membrane anionique peut comprendre un lavage optionnel de celle-ci avec de l'eau déminéralisée, entre sa mise en contact avec le composé de métal polyvalent et sa mise en contact avec la solution d'hydroxyde de métal alcalin, de même qu'après la mise en contact avec la solution aqueuse d'hydroxyde de métal alcalin. Le lavage est généralement effectué à la température ambiante, bien que des températures plus basses ou plus élevées puissent également convenir.

Le prétraitement de la membrane cationique consiste, pour l'essentiel, à mettre celle-ci en contact avec de l'eau. L'eau mise en oeuvre doit être essentiellement exempte de métal polyvalent et de métal alcalin. L'expression "essentiellement exempte de métal polyvalent et de métal alcalin" signifie que l'eau mise en oeuvre peut éventuellement contenir des métaux polyvalents et/ou des métaux alcalins, mais en des quantités suffisamment faibles pour que ces métaux n'affectent pas les propriétés des membranes. Le cas échéant, la teneur de l'eau en métal polyvalent et/ou en métal alcalin doit être inférieure à 10⁻⁶ mole/l, de préférence à 10⁻⁷ mole/l. En pratique, on utilise de l'eau distillée ou de l'eau déminéralisée du commerce ou industrielle.

Le prétraitement de la membrane cationique a pour fonction d'imprégner la membrane cationique d'eau. A cet effet, l'eau peut être appliquée sur la membrane cationique par badigeonnage au moyen d'une brosse, ou par pulvérisation. Un moyen préféré consiste à immerger la membrane cationique dans un bain d'eau déminéralisée. L'eau doit être mise en oeuvre en une quantité au moins suffisante pour imprégner la totalité de la membrane cationique. La quantité minimum d'eau à mettre en oeuvre va dépendre du moyen utilisé pour le prétraitement de conditionnement de la membrane cationique et elle peut être déterminée aisément par des essais de routine au laboratoire. En pratique, il s'est révélé souhaitable de régler la quantité d'eau mise en oeuvre pour qu'à l'issue du prétraitement, la membrane anionique contienne plus de 0,005 (de préférence au moins 0,008) kg d'eau par m² de la face de la membrane cationique, qui est destinée à toucher la membrane anionique dans la membrane bipolaire. En général, la quantité d'eau qui imprègne la membrane cationique à l'issue du prétraitement n'excède pas 0,1 (de préférence 0,08) kg/m².

L'eau mise en oeuvre au prétraitement de la membrane cationique peut éventuellement contenir des additifs favorables à l'imprégnation de la membrane cationique, notamment des agents tensioactifs. Le cas échéant, ces additifs doivent être exempts de métal polyvalent et de métal alcalin.

Le prétraitement de conditionnement de la membrane cationique peut éventuellement comprendre un traitement supplémentaire ne comportant pas sa mise en contact avec une solution aqueuse. On préfère toutefois, selon l'invention, que le prétraitement de la membrane cationique soit essentiellement constitué de sa mise en contact avec de l'eau, tel qu'exposé plus haut.

Tous moyens appropriés peuvent être mis en oeuvre pour accoler la membrane cationique à la membrane anionique. Un moyen préféré, selon une forme de réalisation particulière de l'invention, consiste à appliquer les deux membranes l'une sur l'autre, à l'état humide, en évitant la formation de poches d'air entre les deux membranes. A cet effet, dans cette forme de réalisation de l'invention, la membrane anionique est immergée dans un bain d'eau déminéralisée, à l'issue de son prétraitement de conditionnement. On peut opérer à la température ambiante ou à haute température, à condition que celle-ci reste inférieure à la température de dégradation thermique de la membrane anionique ou de la membrane cationique.

La membrane bipolaire recueillie à l'issue du procédé selon l'invention doit de préférence être conservée à l'état humide, avant son utilisation dans une cellule d'électrodialyse.

Comparé au procédé connu décrit plus haut, en référence à la demande internationale WO 89/01059 (UNISEARCH LIMITED), le procédé selon l'invention présente l'avantage d'une plus grande simplicité en ce qui concerne le prétraitement de la membrane cationique. Il s'ensuit une utilisation moindre de réactifs, notamment de métal polyvalent et d'hydroxyde de métal alcalin et, par voie de conséquence, une diminution du coût de fabrication de la membrane bipolaire.

La membrane bipolaire obtenue au moyen du procédé selon l'invention tel que décrit ci-dessus est bien adaptée à la décomposition électrochimique de l'eau et elle peut dès lors être utilisée dans les techniques d'électrodialyse mettant en oeuvre des solutions aqueuses. Elle trouve ainsi une utilisation pour la fabrication de solutions aqueuses d'hydroxyde de métal alcalin (spécialement d'hydroxyde de sodium) par électrodialyse de solutions aqueuses de sels de métaux alcalins, tels que du chlorure, du carbonate ou du sulfate de métal alcalin.

L'invention concerne dès lors également un procédé de fabrication d'une solution aqueuse d'hydroxyde de métal alcalin par électrodialyse d'une solution aqueuse d'un sel de métal alcalin, selon lequel on exécute l'électrodialyse en présence d'une membrane bipolaire obtenue au moyen du procédé conforme à l'invention, défini plus haut.

L'invention s'applique spécialement à la fabrication de solutions aqueuses d'hydroxyde de sodium par électrodialyse de solutions aqueuses de chlorure de sodium, par exemple au moyen de la techniques décrite dans le brevet US-A-4238305.

Les exemples qui suivent servent à illustrer l'invention.

Dans les exemples, on a utilisé des membranes cationiques RAIPORE R-4010 (PALL RAI) et des membranes anioniques RAIPORE R-4030 (PALL RAI). Les membranes cationiques RAIPORE R-4010 sont des membranes en polymère fluoré portant des groupements fonctionnels dérivés d'acide sulfonique et les membranes anioniques RAIPORE R-4030 sont des membranes en polymère portant des groupements fonctionnels dérivés d'ammonium quaternaire.

### Exemple 1 (conforme à l'invention)

On a fait subir à la membrane anionique un prétraitement de conditionnement comprenant les étapes successives suivantes :
- une immersion dans une solution aqueuse basique de trichlorure chromique hexahydraté (contenant 50 g de trichlorure chromique hexahydraté et 2 moles d'hydroxyde de sodium par litre) à la température ambiante, pendant 24 heures;
- un lavage par immersion dans un bain d'eau déminéralisée à la température ambiante, pendant 15 minutes;
- une immersion dans une solution aqueuse molaire d'hydroxyde de sodium à 70 °C, pendant 15 minutes;
- un lavage par immersion dans un bain d'eau déminéralisée à la température ambiante, pendant quelques secondes.

La membrane cationique a subi un prétraitement de conditionnement qui a consisté exclusivement en une immersion dans un bain d'eau déminéralisée pendant 1 heure à la température ambiante.

A l'issue des prétraitements respectifs de la membrane anionique et de la membrane cationique, on a appliqué celles-ci l'une sur l'autre à l'état humide et sous faible pression, de manière à former une membrane bipolaire.

Pour évaluer les performances de la membrane bipolaire ainsi obtenue, on a utilisé une cellule de mesure électrochimique divisée en quatre compartiments successifs par la membrane bipolaire à tester, disposée verticalement, et deux membranes cationiques de marque NAFION (DU PONT), disposées verticalement, de part et d'autre de la membrane bipolaire. Dans les deux compartiments d'extrémité de la cellule, on a disposé respectivement une anode et une cathode en nickel. La membrane bipolaire a été orientée dans la cellule, de manière que sa face anionique soit dirigée vers l'anode. Dans les deux compartiments d'extrémité, on a fait circuler une solution à 10 % en poids d'hydroxyde de sodium. Dans le compartiment médian comprenant la face anionique de la membrane bipolaire, on a fait circuler une solution aqueuse lM d'hydroxyde de sodium et, dans le compartiment médian comprenant la face cationique de la membrane bipolaire, on a fait circuler une solution aqueuse lM d'acide chlorhydrique. Les compartiments de la cellule ont été maintenus à la température ambiante.

L'anode et la cathode de la cellule ont été raccordées aux bornes d'une source de courant continu, réglée de manière à générer, dans la cellule, un courant de 1,0 kA par m² de surface de la membrane bipolaire. On a mesuré, au moyen de capillaires de Luggin, la différence de potentiel entre les deux faces de la membrane bipolaire. Celle-ci s'est stabilisée à 0,88 V.

### Exemple 2 (de comparaison)

Dans cet essai, la membrane anionique et la membrane cationique ont été soumises chacune à un prétraitement de conditionnement identique à celui subi par la membrane anionique à l'exemple 1.

On a mesuré la différence de potentiel entre les deux faces de la membrane bipolaire, de la manière et dans les conditions exposées à l'exemple 1. La différence de potentiel s'est stabilisée à 0,90 V.

Une comparaison des exemples 1 et 2 fait apparaître que la membrane bipolaire obtenue au moyen du procédé simplifié de l'exemple 1 (conforme à l'invention) présente des performances au moins comparables à celles de la membrane bipolaire obtenue au moyen du procédé antérieur connu (exemple 2).

## Revendications

1. Procédé de fabrication d'une membrane bipolaire, selon lequel on accole une membrane anionique à une membrane cationique que l'on a au préalable soumises à un prétraitement de conditionnement avec un milieu aqueux, caractérisé en ce que le prétraitement de conditionnement de la membrane anionique comprend une mise en contact de celle-ci avec un composé d'un métal polyvalent et avec une solution aqueuse d'hydroxyde de métal alcalin et en ce que le prétraitement de conditionnement de la membrane cationique avec le milieu aqueux consiste essentiellement en une mise en contact de ladite membrane cationique avec de l'eau qui est essentiellement exempte de métal polyvalent et de métal alcalin.

2. Procédé selon la revendication 1, caractérisé en ce que la teneur de l'eau en métal polyvalent et/ou en métal alcalin est inférieure à 10⁻⁶ mole/l.

3. Procédé selon la revendication 1 ou 2, caractérisé en ce que la mise en contact de la membrane cationique avec l'eau comprend une immersion de ladite membrane cationique dans un bain d'eau déminéralisée.

4. Procédé selon l'une quelconque des revendications 1 à 3, caractérisé en ce que l'on règle la quantité d'eau pour qu'à l'issue du prétraitement de la membrane cationique, celle-ci contienne au moins 0,008 kg d'eau par m² de la face de la membrane cationique, qui est destinée à toucher la membrane anionique dans la membrane bipolaire.

5. Procédé selon l'une quelconque des revendications 1 à 4, caractérisé en ce que, dans le prétraitement de la membrane anionique, le métal polyvalent est mis en oeuvre à l'état d'une solution aqueuse basique d'un sel dudit métal polyvalent.

6. Procédé selon l'une quelconque des revendications 1 à 5, caractérisé en ce que la mise en contact de la membrane anionique avec le métal polyvalent précède sa mise en contact avec la solution aqueuse d'hydroxyde de métal alcalin.

7. Procédé selon l'une quelconque des revendications 1 à 6, caractérisé en ce que, le métal polyvalent mis en oeuvre dans le prétraitement de la membrane anionique comprend du chrome.

8. Procédé selon la revendication 7, caractérisé en ce que le composé de métal polyvalent mis en oeuvre dans le prétraitement de la membrane anionique comprend du trichlorure chromique hexahydraté.

9. Procédé selon l'une quelconque des revendications 1 à 8, caractérisé en ce que la solution aqueuse d'hydroxyde de métal alcalin mise en oeuvre dans le prétraitement de la membrane anionique comprend de l'hydroxyde de sodium et/ou de lithium.

10. Procédé de fabrication d'une solution aqueuse d'hydroxyde de métal alcalin par électrodialyse d'une solution aqueuse d'un sel de métal alcalin, caractérisé en ce qu'on exécute l'électrodialyse en présence d'une membrane bipolaire obtenue au moyen d'un procédé conforme à l'une quelconque des revendications 1 à 9.

## Patentansprüche

1. Verfahren zur Herstellung einer bipolaren Membran, gemäß dem man eine anionische Membran an eine kationische Membran anfügt, die man vorher einer Konditionierungsvorbehandlung mit einem wäßrigen Medium unterzogen hat, dadurch gekennzeichnet, daß die Konditionierungsvorbehandlung der anionischen Membran deren Inkontaktbringen mit einer Verbindung eines mehrwertigen Metalls und mit einer wäßrigen Alkalimetallhydroxidlösung umfaßt, und dadurch, daß die Konditionierungsvorbehandlung der kationischen Membran mit dem wäßrigen Medium im wesentlichen aus einem Inkontaktbringen besagter kationischer Membran mit Wasser, das im wesentlichen frei von mehrwertigem Metall und von Alkalimetall ist, besteht.

2. Verfahren gemäß Anspruch 1, dadurch gekennzeichnet, daß der Gehalt des Wassers an mehrwertigem Metall und/oder an Alkalimetall kleiner als 10⁻⁶ mol/l ist.

3. Verfahren gemäß Anspruch 1 oder 2, dadurch gekennzeichnet, daß das Inkontaktbringen der kationischen Membran mit dem Wasser ein Eintauchen besagter kationischer Membran in ein Bad aus entmineralisiertem Wasser umfaßt.

4. Verfahren gemäß einem der Ansprüche 1 bis 3, dadurch gekennzeichnet, daß man die Wassermenge einstellt, damit am Ende der Vorbehandlung der kationischen Membran diese wenigstens 0,008 kg Wasser pro m² der Fläche der kationischen Membran, die dazu bestimmt ist, die anionische Membran in der bipolaren Membran zu berühren, enthält.

5. Verfahren gemäß einem der Ansprüche 1 bis 4, dadurch gekennzeichnet, daß bei der Vorbehandlung der anionischen Membran das mehrwertige Metall im Zustand einer basischen wäßrigen Lösung eines Salzes besagten mehrwertigen Metalls verwendet wird.

6. Verfahren gemäß einem der Ansprüche 1 bis 5, dadurch gekennzeichnet, daß das Inkontaktbringen der anionischen Membran mit dem mehrwertigen Metall ihrem Inkontaktbringen mit der wäßrigen Alkalimetallhydroxidlösung vorausgeht.

7. Verfahren gemäß einem der Ansprüche 1 bis 6, dadurch gekennzeichnet, daß das bei der Vorbehandlung der anionischen Membran verwendete mehrwertige Metall Chrom umfaßt.

8. Verfahren gemäß Anspruch 7, dadurch gekennzeichnet, daß die bei der Vorbehandlung der anionischen Membran verwendete Verbindung des mehrwertigen Metalls Chromtrichlorid-Hexahydrat umfaßt.

9. Verfahren gemäß einem der Ansprüche 1 bis 8, dadurch gekennzeichnet, daß die bei der Vorbehandlung der anionischen Membran verwendete wäßrige Alkalimetallhydroxidlösung Natrium- und/oder Lithiumhydroxid umfaßt.

10. Verfahren zur Herstellung einer wäßrigen Alkalimetallhydroxidlösung durch Elektrodialyse einer wäßrigen Lösung eines Alkalimetallsalzes, dadurch gekennzeichnet, daß man die Elektrodialyse in Gegenwart einer bipolaren Membran, die mittels eines Verfahrens gemäß einem der der Ansprüche 1 bis 9 erhalten wurde, ausführt.

## Claims

1. Process for the manufacture of a bipolar membrane, according to which an anionic membrane is joined side by side to a cationic membrane, the membranes having been subjected beforehand to a conditioning pretreatment with an aqueous medium, characterized in that the conditioning pretreatment of the anionic membrane comprises bringing the latter into contact with a compound of a polyvalent metal and with an aqueous alkali metal hydroxide solution and in that the conditioning pretreatment of the cationic membrane with the aqueous medium essentially comprises bringing the said cationic membrane into contact with water which is essentially free from polyvalent metal and from alkali metal.

2. Process according to Claim 1, characterized in that the polyvalent metal and/or alkali metal content of the water is less than 10⁻⁶ mol/l.

3. Process according to Claim 1 or 2, characterized in that the cationic membrane is brought into contact with water by immersion of the said cationic membrane in a bath of demineralized water.

4. Process according to any one of Claims 1 to 3, characterized in that the amount of water is adjusted so that, on conclusion of the pretreatment of the cationic membrane, the latter contains at least 0.008 kg of water per m² of the face of the cationic membrane which is intended to adjoin the anionic membrane in the bipolar membrane.

5. Process according to any one of Claims 1 to 4, characterized in that, in the pretreatment of the anionic membrane, the polyvalent metal is used in the form of an aqueous basic solution of a salt of the said polyvalent metal.

6. Process according to any one of Claims 1 to 5, characterized in that the anionic membrane is brought into contact with the polyvalent metal before it is brought into contact with the aqueous alkali metal hydroxide solution.

7. Process according to any one of Claims 1 to 6, characterized in that the polyvalent metal used in the pretreatment of the anionic membrane comprises chromium.

8. Process according to Claim 7, characterized in that the polyvalent metal compound used in the pretreatment of the anionic membrane comprises chromic trichloride hexahydrate.

9. Process according to any one of Claims 1 to 8, characterized in that the aqueous alkali metal hydroxide solution used in the pretreatment of the anionic membrane comprises sodium and/or lithium hydroxide.

10. Process for the manufacture of an aqueous alkali metal hydroxide solution by electrodialysis of an aqueous solution of an alkali metal salt, characterized in that the electrodialysis is carried out in the presence of a bipolar membrane obtained by means of a process in accordance with any one of Claims 1 to 9.
